# EUROPÄISCHE PATENTSCHRIFT

(11) **EP 1 700 951 B1**
(45) Veröffentlichungstag und Bekanntmachung des Hinweises auf die Patenterteilung: **11.06.2008**
(21) Anmeldenummer: 05112115.0
(22) Anmeldetag: 14.12.2005
(51) Int. Cl.: D21F 3/08

(54) **Verfahren und Vorrichtung zur Herstellung einer Walze für eine Papiermaschine sowie derartige Walze**
Process and apparatus for producing a laminating roller for a paper machine and such laminating roller
Procédé et dispositif pour la fabrication d'un rouleau de laminage pour une machine papier et rouleau de laminage du même type

(30) Priorität: 18.02.2005 DE 102005007702
(43) Veröffentlichungstag der Anmeldung: 13.09.2006
(73) Patentinhaber: Voith Patent GmbH, 89522 Heidenheim (DE)
(72) Erfinder: Aufrecht, Harald, 73434, AALEN (DE)
(74) Vertreter: Kunze, Klaus

(56) Entgegenhaltungen:
- EP-A- 0 100 085
- DE-A1- 2 545 146
- DE-U1- 29 521 084
- US-A- 3 718 959
- US-A- 4 104 772
- US-A- 4 104 773
- US-A- 4 176 270

## Beschreibung

Die vorliegende Erfindung betrifft ein Verfahren zur Herstellung einer Walze für eine Papiermaschine, bei welchem ein insbesondere profiliertes Band spiralförmig um einen vorzugsweise mantelförmigen Walzenkern gewickelt wird.

Des Weiteren betrifft die vorliegende Erfindung eine derartige Walze sowie eine Vorrichtung zur Durchführung des Herstellungsverfahrens.

Ein derartiges Verfahren, eine Vorrichtung zur Durchführung des Verfahrens und eine Walze der genannten Art sind aus der DE 25 45 146 A1 oder EP-A-0 100 085 bekannt. Das profilierte Band dient hier dazu, auf kostengünstige Weise eine gerillte Oberfläche an einer Walze für eine Papiermaschine zu schaffen. Hierfür weist das dort verwendete Band an einer außen liegenden Kante einen Einschnitt auf, wodurch sich im Belag eine schraubenförmig verlaufende Rille ergibt. Zudem weist das Band an einer Vertikalseite einen Vorsprung und an der anderen Vertikalseite eine entsprechende Nut auf. Benachbarte Windungen des Bandes greifen dadurch ineinander, so dass ein Lösen des Belags selbst bei einem Reißen des Bandes verhindert ist.

Bei derartigen Walzen mit gewickeltem Walzenbezug kann zwischen dem Walzenkern und dem gewickelten Band Korrosion auftreten. Auch treten Relativbewegungen zwischen den Windungen des Bandes auf, die zwar relativ klein sind aber dennoch die Haltbarkeit des Walzenbezugs beeinträchtigen.

Der Erfindung liegt die Aufgabe zugrunde, ein verbessertes Verfahren und eine verbesserte Vorrichtung zur Herstellung einer solchen Walze sowie eine verbesserte Walze anzugeben.

Diese Aufgabe wird bei einem Verfahren der eingangs genannten Art dadurch gelöst, dass das Band vor dem Aufwickeln mit einer Korrosions- hemmenden und/oder reibungserhöhenden Schicht versehen wird.

Bei einer Walze der genannten Art wird die Aufgabe durch die Merkmale von Anspruch 13 und bei einer Vorrichtung zur Durchführung des erfindungsgemäßen Verfahrens durch die Merkmale von Anspruch 20 gelöst.

Durch das Versehen des Bandes vor dem Aufwickeln mit einer korrosionshemmenden Schicht kann die Korrosion zwischen dem Walzenkern und dem Walzenbezug verhindert oder zumindest verringert werden. Zudem kann eine solche Schicht den Reibungskoeffizienten der Oberfläche des Bandes erhöhen. Dadurch werden Relativbewegungen zwischen den einzelnen Windungen des Bandes im Betrieb gehemmt. Beides führt vorteilhafterweise zu einer deutlichen Erhöhung der Haltbarkeit der Walze.

Ein besonders guter Korrosionsschutz kann erreicht werden, wenn das Band nach einer Ausgestaltung der Erfindung mit der Schicht allseits umhüllt wird. Dies kann beispielsweise durch die Verwendung eines Bades, insbesondere galvanischen Bades, zum Aufbringen der Schicht erreicht werden. Es kann auch ein Bad aus einer Dichtungsmasse oder aushärtbarem Klebstoff verwendet werden. Eine andere Möglichkeit besteht darin, die Schicht auf das Band aufzuspritzen.

Vorteilhaft ist es auch, das Material für die Schicht mit Überschuss aufzutragen, so dass genügend Material in den Aufwickelprozess gelangt, welches sich dort zwischen Walzenkern und Profilband verteilt. Dadurch wird also Korrosionsschutzmittel durch den Zulauf des Profilbandes auf die Walzenkernoberfläche aufgebracht.

Als Beschichtung hat sich insbesondere eine Chrom-Nickel-Legierung als vorteilhaft herausgestellt. Ebenfalls vorteilhaft kann eine Zinkschicht, eine Zinnschicht, eine Lackschicht oder eine Schicht aus einer Schutzfarbe, wie beispielsweise Mennige verwendet werden. Grundsätzlich können auch andere geeignete Materialien verwendet werden.

Für das Band hat sich Stahl, insbesondere Edelstahl, als geeignetes Material, herausgestellt. Dies ist selbst bereits weitgehend korrosionsfest und genügt in vorteilhafter Weise den weiteren Anforderungen an einen Walzenbezug der genannten Art.

Nach einer weiteren Ausgestaltung der Erfindung, die auch für sich beansprucht wird, wird beim Aufwickeln des Bandes dessen Eigenspannung eingestellt. Unter Eigenspannung wird vorliegend verstanden, dass das Profilband durch das Aufbringen von Zugkraft durch Verzögern des Profilbandes vorgespannt wird und so eine innere Vorspannkraft aufgebaut wird. Durch Wahl einer geeigneten Eigenspannung des Bandes kann ebenfalls eine Relativbewegung zwischen den einzelnen Windungen des Bandes gehemmt werden. Ziel einer solchen Einstellung ist außerdem, dass keine Relativbewegung zwischen dem Band und dem Walzenkem auftritt.

Dieses Ziel kann insbesondere dadurch erreicht werden, dass im Bereich der Walzenenden eine höhere oder niedrigere Eigenspannung des Bandes eingestellt wird als im Bereich der Walzen mitte. Durch geeignetes Einstellen der Eigenspannung kann insbesondere einem Aufklaffen der einzelnen Windungen des Bandes entgegengewirkt werden. Dadurch kann weniger Feuchtigkeit in den Bereich zwischen dem Band und dem Walzenkern eindringen, so dass die Korrosionsgefahr verringert oder ausgeschlossen ist.

Ein Einstellen der Eigenspannung des Bandes kann insbesondere dadurch erfolgen, dass das Band beim Aufwickeln beschleunigt oder verzögert wird. Durch Verzögern des Bandes erhöht sich die Eigenspannung, während sie durch Beschleunigen verringert wird.

Wird nach einem Ausführungsbeispiel das Band durch Verdrehen des Walzenkems aufgewickelt, so kann die Beschleunigung oder Verzögerung des Bandes bevorzugt durch zusätzliche Antriebs- oder Bremsmittel bewirkt werden, die auf das Band einwirken. Beispielsweise kann hierfür ein so genannter Spannungstensor verwendet werden. Damit kann eine sehr präzise Einstellung erreicht werden, ohne den Wickelvorgang zu beeinträchtigen.

Eine spezielle Möglichkeit der Einstellung einer Eigenspannung besteht darin, zusätzlich zum Antrieb des Walzenkerns auch den Wickel antreibbar und/oder abbremsbar auszugestalten, von welchem das Profilband abgewickelt wird. Durch entsprechende Einstellung der Drehzahlen bzw. Drehmomente des Walzenkerns einerseits und des Wickels andererseits kann die gewünschte Eigenspannung des Profilbandes eingestellt werden.

Eine andere Möglichkeit besteht darin, vor der Aufwickefstelle mindestens ein Walzenpaar vorzusehen, durch welches das Profilband unter Reibung hindurchgeführt ist. Durch entsprechendes Beschleunigen oder Abbremsen des Walzenpaars kann wiederum die Eigenspannung des Profilbandes in gewünschter Weise eingestellt werden.

Besonders bevorzugt ist es, wenn die Eigenspannung des Bandes während des Aufwickelns gemessen und der festgestellte Wert für eine Regelung der Eigenspannung verwendet wird. Hierdurch wird sichergestellt, dass die gewünschte Eigenspannung in der fertigen Walze mit hoher Genauigkeit erreicht wird.

Eine Vorrichtung zur Durchführung des erfindungsgemäßen Verfahrens umfasst eine Vorrichtung zum Aufwickeln des Bandes auf den Walzenkern und Mittel zum Beschichten des Bandes mit einer korrosionshemmenden und/oder reibungserhöhenden Schicht. Zum Aufbringen der Schicht können nach einer Ausgestaltung der Erfindung Aufspritzmittel vorgesehen sein.

Nach einer anderen Ausgestaltung der Erfindung ist ein insbesondere galvanisches Bad, ein Bad aus einer Dichtungsmasse oder einem aushärtbaren Klebstoff vorgesehen, durch welches das Band beim Aufwickeln hindurchgeführt ist. Dadurch kann in vorteilhafter Weise eine allseitige Umhüllung des Bandes mit der Schicht und gewünschtenfalls auch ein Überschussauftrag erreicht werden, wobei auch hohe Wickelgeschwindigkeiten möglich sind.

Über geeignete Mittel kann die Einstellung der Eigenspannung des Bandes vorgenommen werden. Diese Mittel dienen insbesondere zum Beschleunigen oder Verzögern des Bandlaufs beim Aufwickeln.

Nach einer Ausgestaltung der Erfindung sind Mittel zum Stützen und Verdrehen des Walzenkerns und Mittel zum Zuführen des Bandes auf den Walze nkem vorgesehen sowie Mittel, durch welche das Band vor der Aufwickelstelle mit mindestens einer Walze oder Rolle beaufschlagbar ist, die über einen Motor antreibbar oder abbremsbar ist. Die Aufwicklung des Bandes erfolgt über die Drehmittel, während die Einstellung der Eigenspannung über die das Band beaufschlagende Walze oder Rolle erfolgt. Der Motor treibt dabei die Rolle im Sinne der Bandlaufrichtung an, falls die Eigenspannung reduziert werden soll, oder bremst die Rolle ab, falls die Eigenspannung erhöht werden soll.

Es können auch Mittel zur Messung der Eigenspannung des Bandes während des Aufwickelns vorgesehen sein. Der damit gemessene Wert kann dann Mitteln zur Regelung der Eigenspannung des Bandes zugeführt werden, um eine möglichst genaue Einhaltung der gewünschten Eigenspannung zu erreichen.

Ausführungsbeispiele der Erfindung sind in den Zeichnungen dargestellt und werden nachfolgend beschrieben. Es zeigen, jeweils in schematischer Darstellung,
- Fig. 1: eine teilweise geschnittene Ansicht einer Vorrichtung zur Herstellung einer erfindungsgemäßen Walze nach dem erfindungsgemäßen Verfahren,
- Fig. 2: eine Variante zu Fig. 1 und
- Fig. 3: noch eine Variante zu Fig. 1.

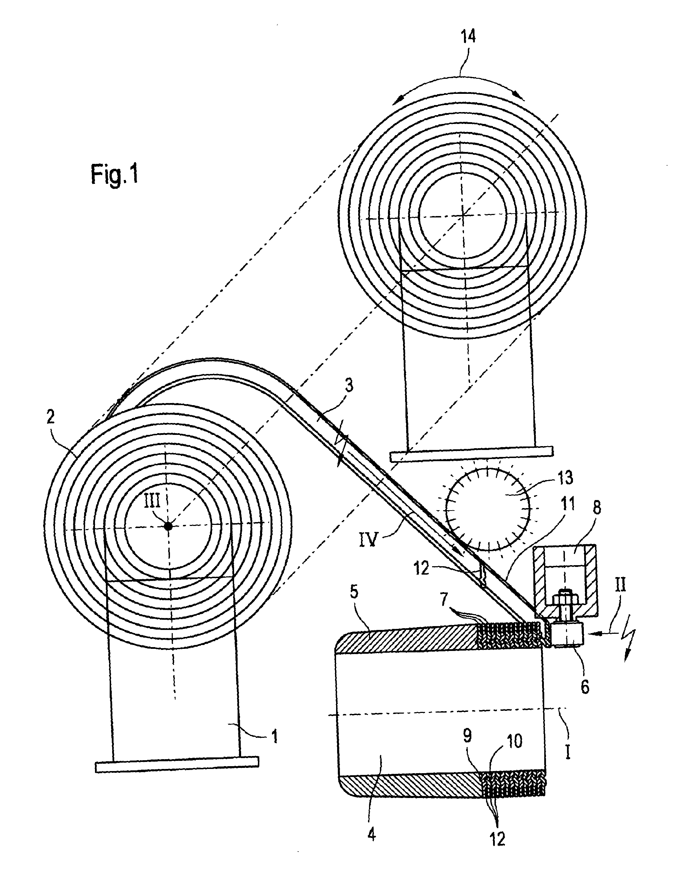

Die in Fig. 1 dargestellte Vorrichtung zur Herstellung einer Walze nach dem erfindungsgemäßen Verfahren umfasst einen Ständer 1 zum drehbaren Lagern eines Stahlprofilwickels 2. Von dem Wickel 2 wird das Stahlprofilband 3 zu einem Walzenkern 4 geführt, der ebenfalls auf einem hier nicht dargestellten Ständer drehbar gelagert ist.

Das Stahlprofilband 3 wird an einem Ende 5 des Walzenkerns 4 umfangsseitig befestigt, beispielsweise angeschweißt. Durch Verdrehen des Walzenkerns 4 um seine Längsachse I und axiales Bewegen des Bandes 3 vom Ende 5 weg wird das Stahlprofilband 3 vom Wickel 2 abgezogen und auf dem Walzenkern 4 spiralförmig aufgewickelt. Dabei wird das Stahlprofilband 3 durch eine Anpressrolle 6 axial gepresst, um die einzelnen Windungen 7 des Stahlprofilbandes 3 fest aneinander anzulegen. Die Anpressrolle 6 ist dabei in einer Halterung 8 gelagert, die durch hier nicht dargestellte Mittel in Axialrichtung II des Walzenkerns 4 verschiebbar ist.

Wie man in Fig. 1 erkennt, ist das Profilband 3 derart profiliert, dass es auf seiner einen Vertikalseite einen Vorsprung 9 und auf seiner anderen Vertikalseite eine entsprechende Nut 10 aufweist. Aufeinander folgende Windungen 7 des Profilbandes 3 greifen dadurch formschlüssig ineinander. Des Weiteren ist das Profilband 3 an seiner Außenkante 11 mit Einschnitten 12 versehen, die im fertigen Walzenbezug eine schraubenförmig verlaufende Rille bilden.

Zwischen dem Stahlprofilwickel 2 und dem Walzenkern 4 ist außerdem eine Vorrichtung zur Beschichtung des Profilbandes 3 mit einer korrosionshemmenden und/oder reibungserhöhenden Schicht angeordnet. Im dargestellten Ausführungsbeispiel handelt es sich hierbei um eine Sprühvorrichtung 13, mit welcher das Profilband 3 mit geeignetem Material, beispielsweise einer Chrom-Nickel-Legierung, Zink, Zinn, Lack oder einer Schutzfarbe wie Mennige besprüht werden kann. Alternativ zu der Sprühvorrichtung 13 kann auch ein Tauchbad vorgesehen sein, insbesondere ein galvanisches Bad, ein Bad aus einer Dichtungsmasse oder aus aushärtbarem Kunststoff, durch welches das Profilband 3 vor dem Aufwickeln auf den Walzenkern 4 hindurchgeführt wird.

Wie mit Doppelpfeil 14 in Fig. 1 dargestellt, kann der Stahlprofilwickel 2 um seine Drehachse III beschleunigt oder verzögert werden. Hierdurch kann im Profilband 3 eine Eigenspannung eingestellt werden, indem beim Abziehen des Profilbands 3 vom Wickel 2 durch den rotierenden Walzenkern 4 der Wickel 2 beschleunigt oder verzögert wird. Die Eigenspannung kann insbesondere in den beiden Enden 5 des Walzenkerns 4 höher oder niedriger eingestellt werden als in der Mitte des Walzenkerns 4. Ebenfalls wird die Eigenspannung bevorzugt so eingestellt, dass sich in der fertigen Walze möglichst keine Relativbewegung zwischen Walzenkern 4 und aufgewickeltem Profilband 3 ergibt.

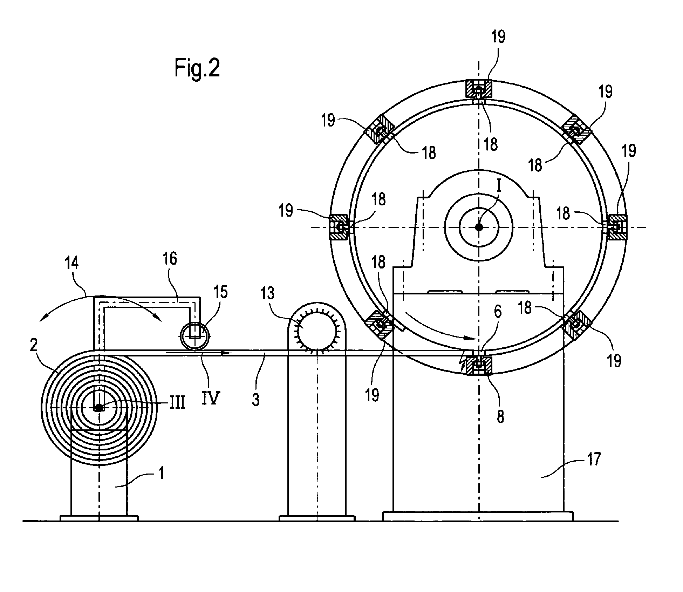

Die in Fig. 2 dargestellte Variante der Erfindung stimmt weitgehend mit der Variante von Fig. 1 überein. Es ist hier lediglich zur Regelung der Eigenspannung des Profilbands 3 eine Messrolle 15 vorgesehen, die direkt oder indirekt die Eigenspannung des Profilbands misst und die Messwerte an eine nicht dargestellte Regelungseinrichtung übergibt. Über eine Haltevorrichtung 16 ist die Rolle 15 gehalten.

Schließlich ist in Fig. 2 noch das Gestell 17 für die Lagerung des Walzenkerns dargestellt sowie mehrere Rollen 18 mit zugehörigen Haltern 19, die entweder nur als Leitrollen für das Profilband 3 auf dem Walzenkern 4 ausgebildet sind oder dazu dienen, den äußeren Teil des Profilbands 3 zu pressen, wie dies in der DE 25 45 146 A1 beschrieben ist. Im Übrigen kann auch hier anstelle der Sprühvorrichtung 13 ein Bad zur Beschichtung des Profilbandes 3 vorgesehen sein.

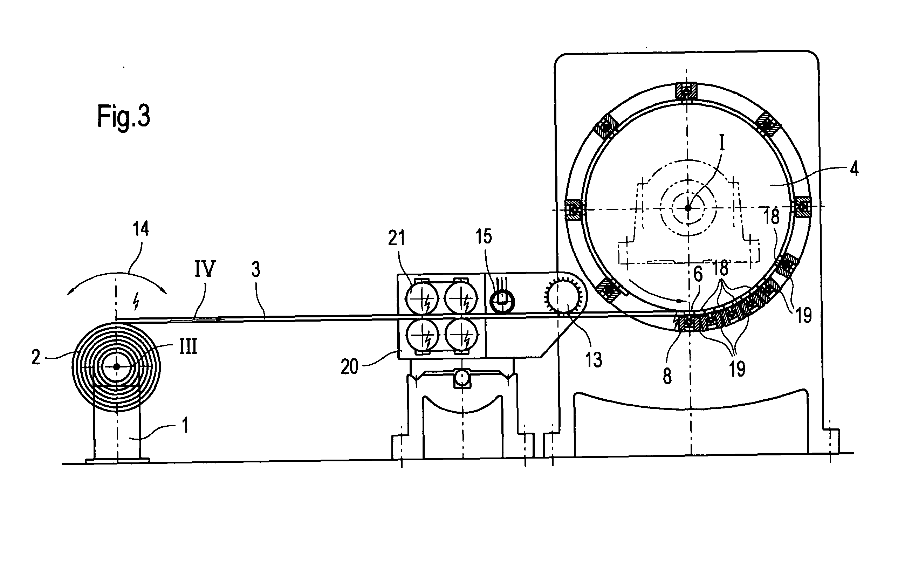

Die Variante von Fig. 3 stimmt wiederum weitgehend mit der Variante von Fig. 2 überein. Zusätzlich ist hier eine Antriebs- und Bremseinrichtung 20 zwischen Wickel 2 und Walzenkern 4 angeordnet. Die Antriebs- und Bremseinrichtung 20 umfasst zwei Walzenpaare 21, zwischen denen das Profilband 3 unter Reibung hindurchgeführt ist. Durch Abbremsen oder Beschleunigen der Walzenpaare 21 kann die Eigenspannung des Profilbandes 3 in gewünschter Weise eingestellt werden, wobei auch hier über eine Messrolle 15 und geeignete Regelungsmittel eine Regelung der Eigenspannung möglich ist.

Bei allen Varianten des erfindungsgemäßen Verfahrens ergibt sich eine verringerte Korrosionsgefahr sowie verringerte Relativbewegungen zwischen den einzelnen Windungen des Profilbandes 3 bzw. zwischen dem Profilband 3 und dem Walzenkem 4. Die Haltbarkeit der erfindungsgemäßen Walze ist dadurch gegenüber bekannten Walzen erhöht.

### Bezugszeichenliste

- 1: Ständer
- 2: Stahlprofilwickel
- 3: Profilband
- 4: Walzenkern
- 5: Ende von 4
- 6: Rolle
- 7: Windung
- 8: Halter
- 9: Vorsprung
- 10: Nut
- **11**: **Außenkante von 3**
- 12: Einschnitt
- 13: Sprühvorrichtung
- 14: Doppelpfeil
- 15: Messrolle
- 16: Halter
- 17: Ständer
- 18: Rolle
- 19: Halter
- 20: Antriebs- oder Bremseinrichtung
- 21: Walzenpaar

- I: Drehachse von 4
- II: Axialrichtung
- III: Drehachse von 2
- IV: Zufuhrrichtung

## Patentansprüche

1. Verfahren zur Herstellung einer Walze für eine Papiermaschine, bei welchem ein insbesondere profiliertes Band spiralförmig um einen vorzugsweise mantelförmigen Walzenkern (4) gewickelt und das Band (3) vor dem Aufwickeln mit einer korrosionshemmenden und/oder reibungserhöhenden Schicht versehen wird, **dadurch gekennzeichnet, dass**
das Band (3) als Stahlband ausgeführt ist und mit der Schicht allseits umhüllt wird.

2. Verfahren nach Anspruch 1,
**dadurch gekennzeichnet, dass**
die Schicht auf das Band aufgespritzt wird.

3. Verfahren nach Anspruch 1,
**dadurch gekennzeichnet, dass**
die Schicht durch ein Bad, insbesondere galvanisches Bad, ein Bad aus einer Dichtmasse oder aushärbarem Kunststoff, auf das Band (3) aufgebracht wird.

4. Verfahren nach einem der vorhergehenden Ansprüche,
**dadurch gekennzeichnet, dass**
das Material für die Schicht mit Überschuss aufgetragen wird.

5. Verfahren nach einem der vorhergehenden Ansprüche,
**dadurch gekennzeichnet, dass**
eine Chrom-Nickel-Legierung, Zink, Zinn, Lack und/oder eine Schutzfarbe wie Mennige für die Schicht verwendet wird.

6. Verfahren nach einem der vorhergehenden Ansprüche,
**dadurch gekennzeichnet, dass**
als Band (3) ein Edelstahlband verwendet wird.

7. Verfahren zur Herstellung einer Walze für eine Papiermaschine, bei welchem ein insbesondere profiliertes Band spiralförmig um einen vorzugsweise mantelförmigen Walzenkern (4) gewickelt wird, nach einem der vorhergehenden Ansprüche, **dadurch gekennzeichnet, dass** beim Aufwickeln des Bandes (3) dessen Eigenspannung eingestellt wird.

8. Verfahren nach Anspruch 7,
**dadurch gekennzeichnet, dass**
die Eigenspannung so eingestellt wird, dass dadurch die Relativbewegung zwischen aufgewickeltem Profil (3) und Walzenkern (4) reduziert ist.

9. Verfahren nach Anspruch 7 oder 8,
**dadurch gekennzeichnet, dass**
im Bereich der Walzenenden (5) eine höhere oder niedrigere Eigenspannung des Bandes (3) eingestellt wird als im Bereich der Walzenmitte.

10. Verfahren nach einem der Ansprüche 7 bis 9,
**dadurch gekennzeichnet, dass**
die Eigenspannung durch Beschleunigen oder Verzögern des Bandlaufs beim Aufwickeln des Bandes eingestellt wird.

11. Verfahren nach einem der vorhergehenden Ansprüche,
**dadurch gekennzeichnet, dass**
das Band (3) durch Verdrehen des Walzenkerns (4) aufgewickelt wird und dass die Beschleunigung oder Verzögerung des Bandes durch zusätzlich auf das Band (3) einwirkende Antriebs- oder Bremsmittel (15) bewirkt wird.

12. Verfahren nach Anspruch 11,
**dadurch gekennzeichnet, dass**
die Beschleunigung oder Verzögerung des Bandes (3) durch Beschleunigen oder Verzögern eines Wickels (2) erfolgt, von dem das Band (3) abgezogen wird.

13. Verfahren nach Anspruch 11 oder 12,
**dadurch gekennzeichnet, dass**
die Beschleunigung oder Verzögerung des Bandes (3) durch Beschleunigen oder Verzögern mindestens eines Walzenpaares (21) erfolgt, durch welches das Profilband (3) unter Reibung hindurchgeführt ist.

14. Verfahren nach einem der Ansprüche 7 bis 13,
**dadurch gekennzeichnet, dass**
die Eigenspannung des Bandes (3) während des Aufwickelns gemessen und der festgestellte Wert für eine Regelung der Eigenspannung verwendet wird.

15. Walze für eine Papiermaschine mit einem insbesondere mantelförmigen Walzenkern (4) und einem spiralförmig um den Walzenkern (4) gewickelten, insbesondere profilierten Band (3); welches mit einer korrosionshemmenden und/oder reibungserhöhenden Schicht versehen ist,
**dadurch gekennzeichnet, dass**
das Band (3) als Stahlband ausgeführt und mit der Schicht allseits umhüllt ist.

16. Walze nach Anspruch 15,
**dadurch gekennzeichnet, dass**
die Schicht aus einer Chrom-Nickel-Legierung, Zink, Zinn, Lack und/oder einer Schutzfarbe wie Mennige besteht.

17. Walze nach Anspruch 15 oder 16,
**dadurch gekennzeichnet, dass**
das Band (3) aus Edelstahl besteht

18. Walze nach einem der Ansprüche 15 bis 17,
**dadurch gekennzeichnet, dass**
das aufgewickelte Band (3) eine Eigenspannung aufweist.

19. Walze nach Anspruch 18,
**dadurch gekennzeichnet, dass**
die Eigenspannung so gewählt ist, dass eine Relativbewegung zwischen aufgewickeltem Profilband (3) und Walzenkern (4) reduziert ist.

20. Walze nach Anspruch 18 oder 19,
**dadurch gekennzeichnet, dass**
die Eigenspannung im Bereich der Walzenenden (5) höher oder niedriger ist als in der Walzenmitte.

21. Vorrichtung zur Durchführung des Verfahrens nach Anspruch 1, mit einer Vorrichtung zum Aufwickeln des Bandes (3) auf den Walzenkern (4) und Mitteln (13) zum Beschichten des Bandes mit einer korrosionshemmenden und/oder reibungserhöhenden Schicht, wobei
ein insbesondere profiliertes Band spiralförmig um einen vorzugsweise mantelförmigen Walzenkern (4) gewickelt und das Band (3) vor dem Aufwickeln mit einer korrosionshemmenden und/oder reibungserhöhenden Schicht versehen wird, *w*obei das Band (3) als Stahlband ausgeführt ist und mit der Schicht allseits umhüllt wird.

22. Vorrichtung nach Anspruch 21,
**dadurch gekennzeichnet, dass**
Mittel (13) zum Aufspritzen der Schicht auf das Band vorgesehen sind.

23. Vorrichtung nach Anspruch 21 oder 22,
**dadurch gekennzeichnet, dass**
ein insbesondere galvanisches Bad, ein Bad aus einer Dichtungsmasse oder aushärtbarem Kunststoff, vorgesehen ist, durch welches das Band (3) insbesondere beim Aufwickeln geführt ist.

24. Vorrichtung nach einem der Ansprüche 21 bis 23,
**dadurch gekennzeichnet, dass**
Mittel (15) zur Einstellung der Eigenspannung des Bandes (3) vorgesehen sind.

25. Vorrichtung nach Anspruch 24,
**dadurch gekennzeichnet, dass**
Mittel (15) zum Beschleunigen oder Verzögern des Bandlaufs beim Aufwickeln vorgesehen sind.

26. Vorrichtung nach Anspruch 25,
**dadurch gekennzeichnet, dass**
Mittel (17) zum Stützen und Verdrehen des Walzenkerns (4) und Mittel zum Zuführen des Bandes (3) auf den Walzenkern (4) vorgesehen sind sowie Mittel, durch welche das Band (3) vor der Aufwickelstelle mit mindestens einem Walzenpaar (21) beaufschlagbar ist, das über einen Motor antreibbar oder abbremsbar ist.

27. Vorrichtung nach Anspruch 25 oder 26,
**dadurch gekennzeichnet, dass**
das Band (3) von einem Wickel (2) abziehbar ist und dass der Wickel (2) über einen Motor antreibbar oder abbremsbar ist.

28. Vorrichtung nach einem der Ansprüche 21 bis 27,
**dadurch gekennzeichnet, dass**
Mittel zur Messung der Eigenspannung des Bandes (3) während des Aufwickelns vorgesehen sind.

29. Vorrichtung nach einem der Ansprüche 21 bis 28,
**dadurch gekennzeichnet, dass**
Mittel zur Regelung der Eigenspannung des Bandes während des Aufwickelns vorgesehen sind.

## Claims

1. Process for producing a roll for a paper machine, in which an in particular profiled strip is wound spirally around a preferably shell-like roll core (4) and, before being wound on, the strip (3) is provided with a corrosion-inhibiting and/or friction-increasing layer, **characterized in that** the strip (3) is implemented as a steel strip and is sheathed with the layer on all sides.

2. Process according to Claim 1, **characterized in that** the layer is sprayed onto the strip.

3. Process according to Claim 1, **characterized in that** the layer is applied to the strip (3) by a bath, in particular an electroplating bath, a bath made of a sealing compound or a curable plastic.

4. Process according to one of the preceding claims, **characterized in that** the material for the layer is applied in excess.

5. Process according to one of the preceding claims, **characterized in that** a chromium-nickel alloy, zinc, tin, varnish and/or a protective paint such as red lead oxide is used for the layer.

6. Process according to one of the preceding claims,
**characterized in that** the strip (3) used is a stainless steel strip.

7. Process for producing a roll for a paper machine, in which an in particular profiled strip is wound spirally around a preferably shell-like roll core (4), according to one of the preceding claims, **characterized in that**, as the strip (3) is wound on, its inherent stress is set.

8. Process according to Claim 7, **characterized in that** the inherent stress is set in such a way that the relative movement between wound-on profile (3) and roll core (4) is reduced as a result.

9. Process according to Claim 7 or 8, **characterized in that** a higher or lower inherent stress of the strip (3) is set in the region of the ends (5) of the roll than in the region of the centre of the roll.

10. Process according to one of Claims 7 to 9, **characterized in that** the inherent stress is set by accelerating or decelerating the run of the strip as the strip is wound on.

11. Process according to one of the preceding claims, **characterized in that** the strip (3) is wound on by rotating the roll core (4), and **in that** the acceleration or deceleration of the strip is effected by driving or braking means (15) additionally acting on the strip (3).

12. Process according to Claim 11, **characterized in that** the acceleration or deceleration of the strip (3) is carried out by accelerating or decelerating a coil (2) from which the strip (3) is drawn off.

13. Process according to Claim 11 or 12, **characterized in that** the acceleration or deceleration of the strip (3) is carried out by accelerating or decelerating at least one pair of rolls (21) through which the profiled strip (3) is led under friction.

14. Process according to one of Claims 7 to 13, **characterized in that** the inherent stress of the strip (3) is measured as it is wound on and the value established is used to regulate the inherent stress.

15. Roll for a paper machine, having an in particular shell-like roll core (4) and an in particular profiled strip (3) which is wound spirally around the roll core (4) and which is provided with a corrosion-inhibiting and/or friction-increasing layer, **characterized in that** the strip (3) is implemented as a steel strip and is sheathed with the layer on all sides.

16. Roll according to Claim 15, **characterized in that** the layer consists of a chromium-nickel alloy, zinc, tin, varnish and/or a protective paint such as red lead oxide.

17. Roll according to Claim 15 or 16, **characterized in that** the strip (3) consists of stainless steel.

18. Roll according to one of Claims 15 to 17, **characterized in that** the strip (3) wound on has an inherent stress.

19. Roll according to Claim 18, **characterized in that** the inherent stress is chosen such that a relative movement between profiled strip (3) wound on and roll core (4) is reduced.

20. Roll according to Claim 18 or 19, **characterized in that** the inherent stress is higher or lower in the region of the ends (5) of the roll than in the centre of the roll.

21. Apparatus for carrying out the method according to Claim 1, having an apparatus for winding the strip (3) onto the roll core (4) and means (13) for coating the strip with a corrosion-inhibiting and/or friction-increasing layer, an in particular profiled strip being wound spirally around a preferably shell-like roll core (4) and, before being wound on, the strip (3) being provided with a corrosion-inhibiting and/or friction-increasing layer, the strip (3) being implemented as a steel strip and being sheathed with the layer on all sides.

22. Apparatus according to Claim 21, **characterized in that** means (13) are provided for spraying the layer on to the strip.

23. Apparatus according to Claim 21 or 22, **characterized in that** an in particular electroplating bath, a bath of a sealing compound or curable plastic, is provided, through which the strip (3) is guided, in particular as it is wound on.

24. Apparatus according to one of Claims 21 to 23, **characterized in that** means (15) are provided for setting the inherent stress of the strip (3).

25. Apparatus according to Claim 24, **characterized in that** means (15) are provided for accelerating or decelerating the run of the strip as it is wound on.

26. Apparatus according to Claim 25, **characterized in that** means (17) are provided for supporting and rotating the roll core (4) and means are provided for feeding the strip (3) onto the roll core (4), and also means through which the strip (3) can be acted on before the winding point by at least one pair of rolls (21) which can be driven or braked by a motor.

27. Apparatus according to Claim 25 or 26, **characterized in that** the strip (3) can be drawn off a coil (2), and **in that** the coil (2) can be driven or braked by a motor.

28. Apparatus according to one of Claims 21 to 27, **characterized in that** means are provided for measuring the inherent stress of the strip (3) as it is wound on.

29. Apparatus according to one of Claims 21 to 28, **characterized in that** means are provided for regulating the inherent stress of the strip as it is wound on.

## Revendications

1. Procédé pour la fabrication d'un rouleau pour une machine à papier, dans lequel on enroule une bande, en particulier profilée, en forme de spirale autour d'un noyau de rouleau (4) de préférence en forme d'enveloppe, et on munit la bande (3), avant son enroulement, d'une couche empêchant la corrosion et/ou augmentant le frottement, **caractérisé en ce que** l'on réalise la bande (3) à partir d'une bande d'acier et on la garnit de la couche sur tous les côtés.

2. Procédé selon la revendication 1, **caractérisé en ce que** on dépose la couche par projection sur la bande.

3. Procédé selon la revendication 1, **caractérisé en ce que** l'on dépose la couche sur la bande (3) au moyen d'un bain, en particulier d'un bain galvanique, un bain d'un composant d'étanchéité ou de matière synthétique durcissable.

4. Procédé selon l'une quelconque des revendications précédentes, **caractérisé en ce que** l'on dépose la matière de la couche avec un excédent.

5. Procédé selon l'une quelconque des revendications précédentes, **caractérisé en ce que** l'on utilise pour la couche un alliage chrome-nickel, du zinc, de l'étain, une laque et/ou une peinture de protection telle que du minium.

6. Procédé selon l'une quelconque des revendications précédentes, **caractérisé en ce que** l'on utilise pour la bande (3) une bande en acier allié.

7. Procédé pour la fabrication d'un rouleau pour une machine à papier, dans lequel on enroule une bande, en particulier profilée, en forme de spirale autour d'un noyau de rouleau (4) de préférence en forme d'enveloppe selon l'une quelconque des revendications précédentes, **caractérisé en ce que** l'on règle la contrainte propre de la bande (3) lors de son enroulement.

8. Procédé selon la revendication 7, **caractérisé en ce que** l'on règle la contrainte propre de manière à réduire ainsi le mouvement relatif entre le profil enroulé (3) et le noyau de rouleau (4).

9. Procédé selon la revendication 7 ou 8, **caractérisé en ce que** l'on règle une contrainte propre de la bande (3) plus élevée ou plus faible dans la région des extrémités du rouleau (5) que dans la région du milieu du rouleau.

10. Procédé selon l'une quelconque des revendications 7 à 9, **caractérisé en ce que** l'on règle la contrainte propre par une accélération ou un ralentissement du défilement de la bande lors de l'enroulement de la bande.

11. Procédé selon l'une quelconque des revendications précédentes, **caractérisé en ce que** l'on enroule la bande (3) en faisant tourner le noyau de rouleau (4) et **en ce que** l'on provoque l'accélération ou le ralentissement de la bande par des moyens d'entraînement ou de freinage (15) agissant en plus sur la bande (3).

12. Procédé selon la revendication 11, **caractérisé en ce que** l'on opère l'accélération ou le ralentissement de la bande (3) en accélérant ou en ralentissant une bobine (2), à partir de laquelle la bande (3) est prélevée.

13. Procédé selon la revendication 11 ou 12, **caractérisé en ce que** l'on opère l'accélération ou le ralentissement de la bande (3) en accélérant ou en ralentissant au moins une paire de rouleaux (21), à travers laquelle la bande profilée (3) est guidée avec frottement.

14. Procédé selon l'une quelconque des revendications 7 à 13, **caractérisé en ce que** l'on mesure la contrainte propre de la bande (3) pendant l'enroulement et on utilise la valeur détectée pour la régulation de la contrainte propre.

15. Rouleau pour une machine à papier, comportant un noyau de rouleau (4), en particulier en forme d'enveloppe, et une bande (3), en particulier profilée, enroulée en forme de spirale autour du noyau de rouleau (4), qui est pourvue d'une couche empêchant la corrosion et/ou augmentant le frottement, **caractérisé en ce que** la bande (3) est une bande d'acier et est enrobée par la couche sur tous les côtés.

16. Rouleau selon la revendication 15, **caractérisé en ce que** la couche se compose d'un alliage chrome-nickel, de zinc, d'étain, d'une laque et/ou d'une peinture de protection telle que le minium.

17. Rouleau selon la revendication 15 ou 16, **caractérisé en ce que** la bande (3) est en acier allié.

18. Rouleau selon l'une quelconque des revendications 15 à 17, **caractérisé en ce que** la bande enroulée (3) présente une contrainte propre.

19. Rouleau selon la revendication 18, **caractérisé en ce que** la contrainte propre est choisie de manière à réduire un mouvement relatif entre la bande profilée enroulée (3) et le noyau de rouleau (4).

20. Rouleau selon la revendication 18 ou 19, **caractérisé en ce que** la contrainte propre est plus élevée ou plus faible dans la région des extrémités du rouleau (5) que dans la région du milieu du rouleau.

21. Dispositif permettant la mise en oeuvre du procédé selon la revendication 1, comportant un dispositif pour l'enroulement de la bande (3) sur le noyau de rouleau (4) et des moyens (13) pour revêtir la bande avec une couche empêchant la corrosion et/ou augmentant le frottement, dans lequel une bande, en particulier profilée, est enroulée autour d'un noyau de rouleau (4) de préférence en forme d'enveloppe et la bande (3) est pourvue, avant son enroulement, d'une couche empêchant la corrosion et/ou augmentant le frottement, dans lequel la bande (3) est une bande d'acier et est enrobée par la couche sur tous les côtés.

22. Dispositif selon la revendication 21, **caractérisé en ce qu'**il est prévu des moyens (13) pour déposer la couche par projection sur la bande.

23. Dispositif selon la revendication 21 ou 22, **caractérisé en ce qu'**il est prévu un bain en particulier galvanique, un bain d'un composant d'étanchéité ou d'une matière synthétique durcissable, à travers lequel la bande (3) est guidée en particulier lors de l'enroulement.

24. Dispositif selon l'une quelconque des revendications 21 à 23, **caractérisé en ce qu'**il est prévu des moyens (15) pour le réglage de la contrainte propre de la bande (3).

25. Dispositif selon la revendication 24, **caractérisé en ce qu'**il est prévu des moyens (15) pour l'accélération ou le ralentissement du défilement de la bande lors de son enroulement.

26. Dispositif selon la revendication 25, **caractérisé en ce qu'**il est prévu des moyens (17) pour soutenir et faire tourner le noyau de rouleau (4) et des moyens pour amener la bande (3) sur le noyau de rouleau (4), ainsi que des moyens, par lesquels la bande (3) peut être sollicitée avant son enroulement avec au moins une paire de rouleaux (21), qui peut être entraînée ou freinée au moyen d'un moteur.

27. Dispositif selon la revendication 25 ou 26, **caractérisé en ce que** la bande (3) peut être prélevée hors d'une bobine (2) et **en ce que** la bobine (2) peut être entraînée ou freinée au moyen d'un moteur.

28. Dispositif selon l'une quelconque des revendications 21 à 27, **caractérisé en ce qu'**il est prévu des moyens pour la mesure de la contrainte propre de la bande (3) pendant l'enroulement.

29. Dispositif selon l'une quelconque des revendications 21 à 28, **caractérisé en ce qu'**il est prévu des moyens pour la régulation de la contrainte propre de la bande pendant l'enroulement.
